# EUROPEAN PATENT APPLICATION

(11) **EP 4 852 588 A1**
(43) Date of publication of application: **09.12.2026**
(21) Application number: 25751064.4
(22) Date of filing: 10.01.2025
(51) Int. Cl.: H04W 72/231

(54) **COMMUNICATION METHOD AND APPARATUS**

(30) Priority: 08.02.2024 CN 202410178146
(71) Applicant: HUAWEI TECHNOLOGIES CO., LTD., Shenzhen, Guangdong 518129 (CN)
(72) Inventor: WANG, Xiaona, Shenzhen, Guangdong 518129 (CN); LIU, Fengwei, Shenzhen, Guangdong 518129 (CN)
(74) Representative: Huawei European IPR
(86) International application number: PCT/CN2025/071703
(87) International publication number: WO 2025/167462

(57) **Abstract**

Embodiments of this application provide a communication method and apparatus, to improve a data transmission rate. The method includes: receiving first configuration information, where the first configuration information is used to configure M reference signal ports, the M reference signal ports include a first reference signal port and a second reference signal port, the first reference signal port and the second reference signal port correspond to a same antenna port, and M is an integer greater than 1; receiving, based on the first configuration information, a first reference signal corresponding to the M reference signal ports; and determining a first parameter based on the first reference signal, where the first parameter includes one or more of the following: first channel state information, a receive beam of a terminal device, or a transmit beam of the terminal device.

## Description

### CROSS-REFERENCE TO RELATED APPLICATIONS

This application claims priority to Chinese Patent Application No. 202410178146.9, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In high-frequency communication scenarios, a network device may configure, for a terminal device, a reference signal resource for beam management (beam management, BM), and the terminal device may determine a transmit/receive beam pair based on measurement of a reference signal corresponding to the reference signal resource.

The network device may configure a transmission configuration indicator (transmission configuration indicator, TCI) for the terminal device, to indicate the reference signal resource for beam management or a reference signal for channel state information measurement. The reference signal includes, for example, a channel state information reference signal (channel state information reference signal, CSI-RS).

However, in medium- and low-frequency communication scenarios, the network device may send a downlink signal by using digital domain weighting (for a transmit beam), where a digital domain weight changes dynamically based on a channel on a terminal side. A transmit beam (for example, a beam 1) used by the network device to transmit data or send a CSI-RS is different from a transmit beam for sending a reference signal during beam management, and a receive beam determined by the terminal device during beam management may not be a receive beam that best matches the beam 1. As a result, the terminal device cannot receive the data or the CSI-RS by using an optimal receive beam, affecting a data transmission rate.

### SUMMARY

Embodiments of this application provide a communication method and apparatus, to improve a data transmission rate.

According to a first aspect, a communication method is provided. The method may be performed by a terminal device, or may be performed by a chip system. The chip system can implement functions of the terminal device. The method includes: receiving first configuration information, where the first configuration information is used to configure M reference signal ports, the M reference signal ports include a first reference signal port and a second reference signal port, the first reference signal port and the second reference signal port correspond to a same antenna port, and M is an integer greater than 1; receiving, based on the first configuration information, a first reference signal corresponding to the M reference signal ports; and determining a first parameter based on the first reference signal, where the first parameter includes one or more of the following: first channel state information, a receive beam of a terminal device, or a transmit beam of the terminal device.

In this embodiment of this application, the first reference signal may be used to determine the receive beam, and may also be used to determine channel state information (the first channel state information) of a downlink data channel, so that a matching degree between a receive beam used by the terminal device to receive data and a transmit beam used by a network device to send the data, thereby helping improve a data transmission rate.

In a possible implementation, the M reference signal ports are included in N port groups, a quantity K1 of reference signal ports included in a first port group among the N port groups is greater than or equal to a quantity K2 of reference signal ports included in a second port group among the N port groups, and K1 antenna ports corresponding to the first port group include K2 antenna ports corresponding to the second port group. The M reference signal ports are grouped, so that the terminal device can receive, by using different receive beams, reference signals corresponding to different port groups, to obtain an element-level channel. The terminal device may determine downlink channel state information and the receive beam of the terminal device based on the element-level channel, so that a transmit beam, for downlink signal transmission, determined by the network device based on the downlink channel state information matches a receive beam.

In a possible implementation, the first configuration information is further used to configure N. Receiving, based on the first configuration information, the first reference signal corresponding to the M reference signal ports includes: receiving, by using N receive beams, the first reference signal corresponding to the M reference signal ports, where each of the N receive beams is used to receive a first reference signal corresponding to one port group. N is configured by using the first configuration information, so that the terminal device can determine a quantity of receive beams of reference signals corresponding to the M reference signal ports.

In a possible implementation, a reference signal corresponding to each of the N port groups occupies a different time domain resource. Because different port groups may correspond to a same antenna port, or different port groups may include reference signal ports corresponding to a same antenna port, configuring the reference signal corresponding to each of the N port groups to occupy the different time domain resource can reduce a probability of an antenna port conflict.

In a possible implementation, M reference signals are associated with a plurality of reference signal resources, the plurality of reference signal resources include a first reference signal resource and a second reference signal resource, and a transmission period of the first reference signal resource is an integer multiple of a transmission period of the second reference signal resource. A reference signal resource with a long period is configured to obtain a full element-level channel on a terminal side, and a proper downlink receive beam is selected for downlink channel state information measurement. A reference signal corresponding to a reference signal resource with a short period is received based on the downlink receive beam. This effectively improves measurement precision of downlink channel state information without significantly increasing reference signal resource overheads.

In a possible implementation, the method further includes: receiving a second reference signal by using the receive beam; and determining second channel state information based on the second reference signal, where the second channel state information is used to determine channel state information of a downlink data channel. The terminal device receives the second reference signal by using a receive beam determined based on the first reference signal, without a need of additional beam management. Therefore, a probability that a reference signal or data cannot be received by using an optimal receive beam because a transmit beam of a downlink signal is different from a transmit beam in a beam management phase can be reduced.

In a possible implementation, the method further includes: receiving second configuration information, where the second configuration information is used to configure a codebook associated with the M reference signal ports, and a quantity of antenna ports corresponding to the codebook is less than M. The network device sends, to the terminal device, information for configuring a codebook, which is existing protocol-specified. In addition, because a quantity of reference signal ports included in each port group is less than M, the quantity of antenna ports corresponding to the codebooks is also less than M.

In a possible implementation, the method further includes: receiving the second configuration information, where the second configuration information is used to configure a first codebook and a second codebook that are associated with the M reference signal ports, the codebooks include the first codebook and the second codebook, a quantity of antenna ports corresponding to the first codebook is equal to M, and a quantity of antenna ports corresponding to the second codebook is less than M. The network device sends, to the terminal device, information for configuring the first codebook and the second codebook, which is existing protocol-specified.

According to a second aspect, a communication method is provided. The method may be performed by a network device, or may be performed by a chip system. The chip system can implement functions of the network device. The method includes: sending first configuration information, where the first configuration information is used to configure M reference signal ports, the M reference signal ports include a first reference signal port and a second reference signal port, the first reference signal port and the second reference signal port correspond to a same antenna port, and M is an integer greater than 1; and sending, based on the first configuration information, a first reference signal corresponding to the M reference signal ports.

In a possible implementation, the M reference signal ports are included in N port groups, a quantity K1 of reference signal ports included in a first port group among the N port groups is greater than or equal to a quantity K2 of reference signal ports included in a second port group among the N port groups, and K1 antenna ports corresponding to the first port group include K2 antenna ports corresponding to the second port group.

In a possible implementation, the first configuration information is further used to configure N.

In a possible implementation, each of the N port groups occupies a different time domain resource.

In a possible implementation, M reference signals are associated with a plurality of reference signal resources, the plurality of reference signal resources include a first parameter signal resource and a second reference signal resource, and a transmission period of the first reference signal resource is an integer multiple of a transmission period of the second reference signal resource.

In a possible implementation, the method further includes: sending second reference signals through M antenna ports, where the M antenna ports are in one-to-one correspondence with the M reference signal ports.

In a possible implementation, the method further includes: sending second configuration information, where the second configuration information is used to configure a codebook associated with the M reference signal ports, and a quantity of antenna ports corresponding to the codebook is less than M.

According to a third aspect, an embodiment of this application provides a communication apparatus. The apparatus may be a terminal device, or may be a module (for example, a chip) used in the terminal device. The apparatus has a function of implementing any one of the implementation methods of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a network device, or may be a module (for example, a chip) used in the network device. The apparatus has a function of implementing any one of the implementation methods of the second aspect. The function may be implemented by hardware, or may be implemented by hardware executing corresponding software. The hardware or the software includes one or more modules corresponding to the function.

According to a fifth aspect, an embodiment of this application provides a communication apparatus. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the terminal device in the first aspect or the method performed by the network device in the second aspect.

According to a sixth aspect, an embodiment of this application provides a computer-readable storage medium. The computer-readable storage medium is configured to store a computer program. When the computer program is run on a computer, the computer is caused to perform the method according to the first aspect or the second aspect.

According to a seventh aspect, an embodiment of this application provides a computer program product, including a computer program. When the computer program is run on a computer, the computer is caused to perform the method according to the first aspect or the second aspect.

According to an eighth aspect, a chip system is provided, and includes a processor and an interface. The processor is configured to invoke instructions from the interface and run the instructions, to cause the chip system to implement the method according to the first aspect or the second aspect.

For beneficial effects of the second aspect to the eighth aspect, refer to the beneficial effects of the first aspect. Details are not described again.

### BRIEF DESCRIPTION OF DRAWINGS

FIG. 1A, FIG. 1B, and FIG. 1C are diagrams of several application scenarios used in embodiments of this application;
FIG. 2A and FIG. 2B each are a diagram of a correspondence between a transmit beam and a receive beam;
FIG. 3 is a flowchart of a communication method according to an embodiment of this application;
FIG. 4 is an example diagram in which a network device sends, to a terminal device, a first reference signal corresponding to M reference signal ports according to an embodiment of this application;
FIG. 5 is a diagram of an architecture of a communication system according to an embodiment of this application; and
FIG. 6 is a diagram of a structure of another communication apparatus according to an embodiment of this application.

### DESCRIPTION OF EMBODIMENTS

The following describes in detail embodiments of this application with reference to accompanying drawings. Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), or a communication system used in the future or another similar communication system.

The technical solutions in embodiments of this application may be also applied to technical fields such as unmanned driving (unmanned driving), driver assistance (driver assistance, ADAS), intelligent driving (intelligent driving), connected driving (connected driving), intelligent network driving (Intelligent network driving), car sharing (car sharing), a smart car (smart/intelligent car), a digital car (digital car), an unmanned car (unmanned car/driverless car/pilotless car/automobile), an internet of vehicles (Internet of vehicles, IoV), a self-driving car (self-driving car/autonomous car), cooperative vehicle infrastructure (cooperative vehicle infrastructure, CVIS), intelligent transport (intelligent transport system, ITS), and vehicular communication (vehicular communication).

To make embodiments of the present invention clearer, the following collectively describes some content and concepts related to embodiments of the present invention.
(1) A terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, or the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), a smart home, a smart office, a smart wearable, intelligent transport, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.
   In embodiments of this application, a communication apparatus configured to implement functions of the terminal device may be the terminal device, or may be an apparatus, for example, a chip system, that can support the terminal device in implementing the functions. The apparatus may be installed in the terminal device. In the technical solutions provided in embodiments of this application, the technical solutions provided in embodiments of this application are described by using an example in which the apparatus for implementing the functions of the terminal device is the terminal device. In addition, for ease of description, an example in which the terminal device is the UE is used for description in embodiments of this application.
(2) A network device includes, for example, an access network device and/or a core network device. The access network device is a network-side device having a wireless transceiver function. The access network device may be an apparatus that is in a radio access network (radio access network, RAN) and provides a wireless communication function for a terminal device, and is referred to as a RAN device. For example, the access network device may be a base station (base station), an evolved NodeB (evolved NodeB, which may be referred to as an eNB or e-NodeB for short) in a long term evolution (long term evolution, LTE) system or a long term evolution-advanced (long term evolution-advanced, LTE-A) system, a transmission reception point (transmission reception point, TRP), a next generation base station (next generation NodeB, gNB) in a 5th generation (5th generation, 5G) mobile communication system, a base station in a future mobile communication system, an access node in a Wi-Fi system, or the like. The access network device may alternatively be an access network device in an open radio access network (open RAN, ORAN) system, or the like. The access network device may alternatively be a macro base station, a micro base station (also referred to as a small cell), or an indoor base station, or may be a relay node, a donor node, or the like. The access network device may alternatively be a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a remote radio unit (remote radio unit, RRU), a Wi-Fi access point (access point, AP), a baseband unit pool (BBU pool) and an RRU in a cloud radio access network (cloud radio access network, CRAN), or the like. A specific technology and a specific device form factor that are used by the access network device are not limited in embodiments of this application.

In addition, the access network device may alternatively be a module or a unit that completes a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU may complete functions of a radio resource control protocol and a packet data convergence protocol (packet data convergence protocol, PDCP) of the base station, and may further complete functions of a service data adaptation protocol (service data adaptation protocol, SDAP). The DU may complete functions of a radio link control layer and a medium access control (medium access control, MAC) layer of the base station, and may further complete a part or all of functions of a physical layer. In different systems, the CU (or the CU-CP and the CU-UP), the DU, or the RU may alternatively have different names, but a person skilled in the art may understand meanings of the names. For example, in the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

The core network device is configured to implement functions such as mobility management, data processing, session management, and policy and charging. Names of devices that implement core network functions in systems of different access technologies may be different. This is not limited in embodiments this application. A 5th generation (5th generation, 5G) mobile communication system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement functions of the network device may be the network device, or may be an apparatus, for example, a chip system, that can support the network device in implementing the functions. The apparatus may be installed in the network device. In the technical solutions provided in embodiments of this application, the technical solutions provided in embodiments of this application are described by using an example in which the apparatus for implementing the functions of the network device is the network device.

(3) A beam may be represented as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like in a new radio (new radio, NR) protocol. The beam may be indicated by a transmission configuration indicator state (TCI-state) parameter or a spatial relation (spatial relation) parameter. Therefore, in embodiments of this application, the beam may be replaced with the spatial domain filter, the spatial filter, the spatial domain parameter, the spatial parameter, the spatial domain setting, the spatial setting, the QCL information, the QCL assumption, the QCL indication, the TCI-state, the spatial relation, or the like. Alternatively, the beam may be replaced with another term for indicating the beam. This is not limited in this application.

A beam for sending a signal may be referred to as a transmit beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A beam for receiving a signal may be referred to as a receive beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

One beam may include one or more antenna ports, and is used to transmit a data channel, a control channel, a sounding signal, and the like. The one or more antenna ports forming the beam may also be considered as one antenna port set. In embodiments of this application, an example in which one beam includes one antenna port is used.

(4) In embodiments of this application, unless otherwise specified, a quantity of nouns indicates "a singular noun or a plural noun", that is, "one or more". "At least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one (piece) of a, b, or c indicates a, b, c, a and b, a and c, b and c, or a, b, and c, where a, b, and c may be singular or plural.

Ordinal numerals such as "first" and "second" in embodiments of this application are intended to distinguish between a plurality of objects, and are not intended to limit sizes, content, orders, time sequences, priorities, or importance degrees of the plurality of objects. For example, such names of a first resource and a second resource do not indicate different content, sizes, priorities, importance degrees, or the like of the two resources. In addition, step numbers in embodiments described in embodiments of this application are merely intended to distinguish between different steps, but are not intended to limit a sequence of steps in some cases.

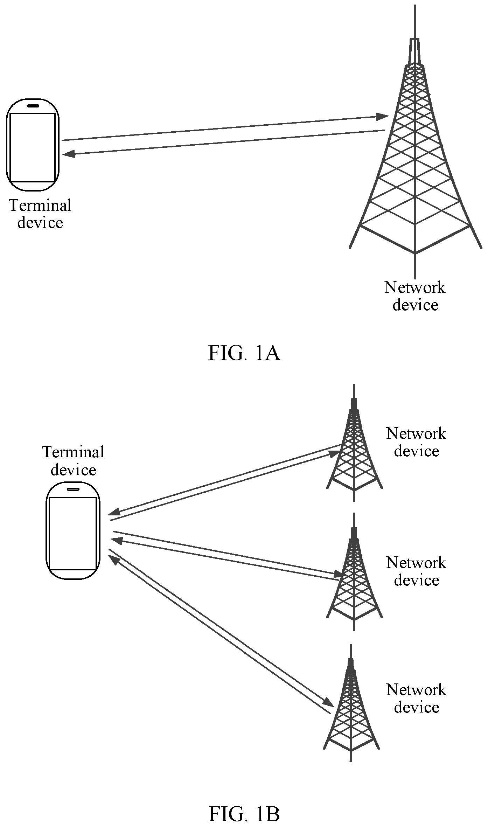

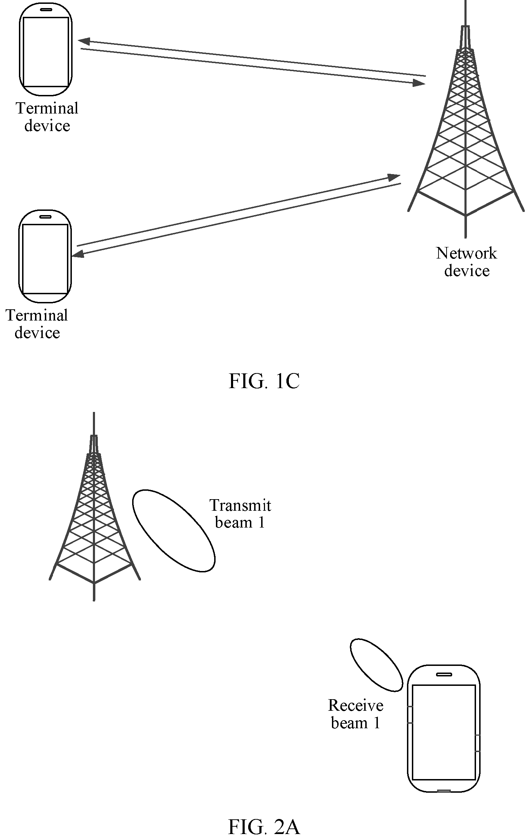

FIG. 1A is a diagram of an application scenario to which an embodiment of this application is applicable. In FIG. 1A, a terminal device and a network device are included. The terminal device and the network device may communicate with each other. Optionally, the application scenario shown in FIG. 1A may alternatively include a plurality of terminal devices and a plurality of network devices. One terminal device may communicate with a plurality of network devices, and one network device may also communicate with a plurality of terminal devices. For example, refer to FIG. 1B and FIG. 1C. FIG. 1B shows a scenario in which one terminal device may communicate with three network devices, and FIG. 1C shows a scenario in which one network device communicates with two terminal devices.

The network device may send a reference signal to the terminal device, and the terminal device may perform channel measurement or beam management based on the reference signal. For example, in a high-frequency communication scenario, the network device may configure, for the terminal device, a reference signal resource for beam management. The terminal device may receive a reference signal based on the reference signal resource, and select corresponding receive beams for different transmit beams based on the reference signal. When transmitting data or sending a CSI-RS to the terminal device, the network device may indicate, by using a TCI, one or more reference signal resources for beam management. A transmit beam used for the one or more reference signal resources for beam management is the same as a transmit beam for transmitting the data or sending the CSI-RS to the terminal device. For example, refer to FIG. 2A. The transmit beam used for the one or more reference signal resources for beam management is a transmit beam 1, and the terminal device may transmit the data or send the CSI-RS based on a receive beam 1 corresponding to the transmit beam 1.

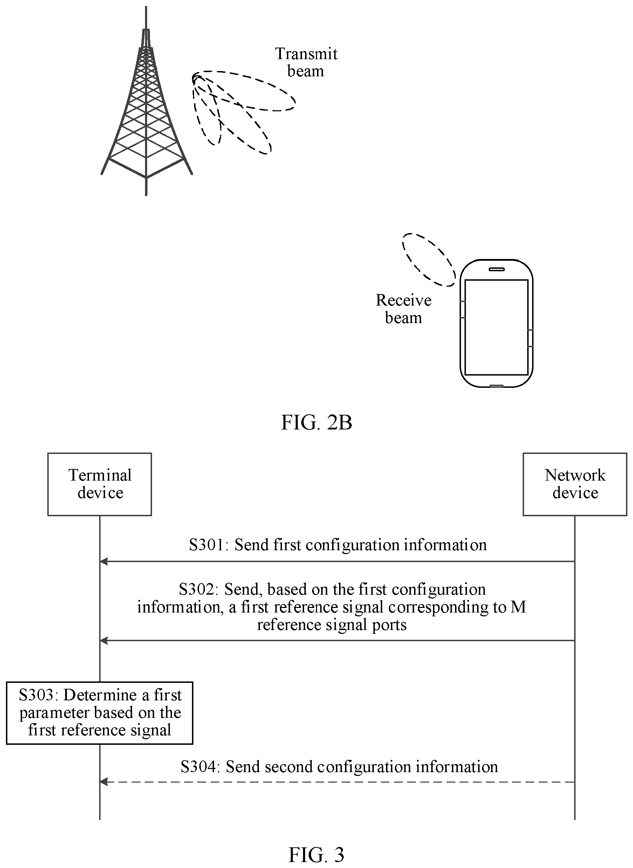

However, it is assumed that the transmit beam used by the network device to transmit the data or send the CSI-RS to the terminal device is different from any transmit beam used during beam management. For example, refer to FIG. 2B. A receive beam that best matches a current transmit beam may not exist in a receive beam determined by the terminal device during beam management. As a result, the terminal device cannot receive the CSI-RS or the data by using an optimal beam.

In view of this, in embodiments of this application, a terminal device may determine, based on a first reference signal, a digital domain weight for downlink data transmission, so that the terminal device can determine an optimal receive beam based on the digital domain weight, thereby helping improve a data transmission rate.

The following describes a method provided in embodiments of this application with reference to the accompanying drawings.

An embodiment of this application provides a communication method. FIG. 3 is a flowchart of the method. The method may be applied to application scenarios shown in FIG. 1A to FIG. 1C. For example, a network device in the method is the network device in the application scenarios shown in FIG. 1A to FIG. 1C, and a terminal device in the method is the terminal device in the application scenarios shown in FIG. 1A to FIG. 1C. In this embodiment of this application, any optional step is represented by a dashed line.

S301: The network device sends first configuration information to the terminal device. Correspondingly, the terminal device receives the first configuration information from the network device.

The first configuration information is used to configure M reference signal ports, the M reference signal ports include a first reference signal port and a second reference signal port, and the first reference signal port and the second reference signal port correspond to a same antenna port. For example, numbers of antenna ports corresponding to the first reference signal port and the second reference signal port each are #3000. In some embodiments, the reference signal port may also be referred to as, for example, a pilot port. Optionally, the first configuration information may be carried in, for example, one or more of the following signaling: radio resource control (radio resource control, RRC) signaling, medium access control control element (medium access control control element, MAC-CE) signaling, or downlink control information (downlink control information, DCI) signaling.

Optionally, the M reference signal ports may be grouped into N groups, that is, the M reference signal ports may be included in N port groups, where N is a positive integer. Optionally, N may be related to a quantity of reference signal resources associated with the M reference signal ports. For example, when the M reference signal ports are associated with one reference signal resource (for example, a reference signal resource 1), N may be determined based on a time domain resource occupied by the reference signal resource 1. In an example in which the reference signal resource 1 occupies four time domain symbols, N may be equal to 4, 2, or 1; and, when N=4, a reference signal port included in each port group is associated with one time domain symbol; when N=2, the reference signal port included in each port group is associated with two time domain symbols; or when N=1, the reference signal port included in each port group is associated with one time domain symbol. Alternatively, N may be determined based on a code division multiplexing (code division multiplexing, CDM) type (type) used between reference signal ports. For example, if the CDM type used between the reference signal ports is frequency domain (frequency domain, FD)-CDM 2, N may be 4 or 2; or if the CDM type used between the reference signal ports is cdm4-FD2-time domain (time domain, TD) 2, N=2.

When the M reference signal ports are associated with a plurality of reference signal resources, N may be determined based on the quantity of reference signal resources. For example, if the M reference signal ports are associated with four reference signal resources, N=4. The one or more reference signal resources are for beam measurement and channel state information measurement. When the M reference signal ports are associated with a plurality of reference signal resources, the plurality of reference signal resources may belong to a same reference signal resource set (for example, non-zero power (non-zero power, NZP)-CSI-RS-ResourceSet), or may belong to different reference signal resource sets. This is not limited in this embodiment of this application.

When the M reference signal ports are associated with a plurality of reference signal resources, optionally, N may be determined based on a quantity of slots occupied by the reference signal resources. For example, if the M reference signal ports are associated with four slot resources, N=4. The one or more reference signal resources are for beam measurement and channel state information measurement. When the M reference signal ports are associated with one reference signal resource (for example, the reference signal resource 1), the network device may further configure two transmission periods for the reference signal resource 1, for example, a first period and a second period. Therefore, optionally, the first configuration information may be further used to configure the first period and the second period. An antenna port for sending a reference signal in the first period is different from an antenna port for sending a reference signal in the second period. For example, antenna ports for sending the reference signal in the first period are an antenna port corresponding to the N port groups; and antenna ports for sending the reference signal in the second period are M antenna ports. The M antenna ports are in one-to-one correspondence with the M reference signal ports, and the first period is greater than or equal to the second period. Optionally, the first period is an integer multiple of the second period.

Alternatively, the network device may further configure a reference signal resource 2 for the terminal device. The reference signal resource 2 includes the M reference signal ports, and the M reference signal ports correspond to the M antenna ports. A transmission period (for example, the first period) of the reference signal resource 1 is greater than or equal to a transmission period (for example, the second period) of the reference signal resource 2. Therefore, optionally, the first configuration information may be further used to configure the reference signal resource 2, and configure the first period and the second period.

Optionally, when the M reference signal ports are associated with a plurality of reference signal resources, the network device may further configure two transmission periods for the plurality of reference signal resources, for example, a third period and a fourth period. The third period is an integer multiple of the fourth period. For example, the plurality of reference signal resources include a first reference signal resource and a second reference signal resource, and the network device may configure a transmission period of the first reference signal resource as the third period, and configure a transmission period of the second reference signal resource as the fourth period. Therefore, optionally, the first configuration information may be further used to configure the third period and the fourth period.

Optionally, a quantity K1 of reference signal ports included in a first port group among the N port groups is greater than or equal to a quantity K2 of reference signal ports included in a second port group among the N port groups, that is, K1≥K2, and K1 antenna ports corresponding to the first port group include K2 antenna ports corresponding to the second port group. Each reference signal port included in a same port group corresponds to a different antenna port. For example, the K1 reference signal ports correspond to the K1 antenna ports.

An example in which M=32 and N=2 is used. A correspondence between the reference signal ports and the antenna ports may include the following several cases.

Case 1: Numbers of the M reference signal ports are all different, to be specific, the numbers of the M reference signal ports are #0, #1, ..., and #31 respectively. The first port group includes 24 reference signal ports, numbers of the corresponding reference signal ports are #0, #1, ..., and #23 respectively, and numbers of corresponding antenna ports are #3000, #3001, ..., and #3023 respectively. The second port group includes eight reference signal ports, numbers of the corresponding reference signal ports are #24, #25, ..., and #31 respectively, and numbers of corresponding antenna ports are #3000, #3001, ..., and #3007 respectively. It may be understood that the numbers #3000, #3001, ..., and #3007 of the antenna ports corresponding to the eight reference signal ports included in the second port group are merely examples, and may be any eight numbers among #3000, #3001, ..., and #3023. For example, Table 1 is an example of the correspondence between the reference signal ports and the antenna ports in this example.

**Table 1**

| | First port group | Second port group |
|---|---|---|
| Numbers of reference signal ports | #0 to #23 | #24 to #31 |
| Numbers of antenna ports | #3000 to #3023 | #3000 to #3007 |

Case 2: Numbers of the M reference signal ports are partially the same. The first port group includes 24 reference signal ports, numbers of the corresponding reference signal ports are #0, #1, ..., and #23 respectively, and numbers of corresponding antenna ports are #3000, #3001, ..., and #3023 respectively. The second port group includes eight reference signal ports, numbers of the corresponding reference signal ports are #0, #1, ..., and #7 respectively, and numbers of corresponding antenna ports are #3000, #3001, ..., and #3007 respectively. It may be understood that the numbers #0, #1, ..., and #7 of the reference signal ports corresponding to the eight reference signal ports included in the second port group are merely examples, and may be any eight numbers of reference signal ports among #0, #1, ..., and #23, and the numbers #3000, #3001, ..., and #3007 of the antenna ports corresponding to the eight reference signal ports included in the second port group are merely examples, and may be any eight numbers among #3000, #3001, ..., and #3023. For example, Table 2 is an example of the correspondence between the reference signal ports and the antenna ports in this example.

**Table 2**

| | First port group | Second port group |
|---|---|---|
| Numbers of reference signal ports | #0 to #23 | #0 to #7 |
| Numbers of antenna ports | #3000 to #3023 | #3000 to #3007 |

Case 3: The first port group includes 16 reference signal ports, corresponding numbers are #0, #1, ..., and #15 respectively, and numbers of corresponding antenna ports are, for example, #3000, #3001, ..., and #3015. The second port group includes 16 reference signal ports, corresponding numbers are #16, #25, ..., and #31 respectively, and numbers of corresponding antenna ports are also #3000, #3001, ..., and #3015. Therefore, when each of the N port groups includes a same quantity of reference signal ports, antenna ports corresponding to different port groups among the N port groups are the same. For example, Table 3 is an example of the correspondence between the reference signal ports and the antenna ports in this example.

**Table 3**

| | First port group | Second port group |
|---|---|---|
| Numbers of reference signal ports | #0 to #15 | #16 to #31 |
| Numbers of antenna ports | #3000 to #3015 | #3000 to #3015 |

As described above, the M reference signal ports may be associated with a plurality of reference signal resources, and the plurality of reference signal resources may belong to a same reference signal resource set or different reference signal resource sets. The following describes a correspondence between the reference signal ports and the antenna ports in different scenarios. An example in which each reference signal resource corresponds to a same quantity of reference signal ports is used.

Scenario 1: The plurality of reference signal resources belong to the same reference signal resource set (for example, a reference resource set 1), and a correspondence between the M reference signal ports and the antenna ports includes the following several cases.

Case A: Reference signal ports of a part of reference signal resources in the reference resource set 1 correspond to antenna ports with a same number. An example in which the reference resource set 1 includes a reference signal resource 1, a reference signal resource 2, and a reference signal resource 3 is used. Reference signal ports of the reference signal resource 1 and the reference signal resource 2 may correspond to antenna ports with a same number, reference signal ports of the reference signal resource 1 and the reference signal resource 3 may correspond to antenna ports with a same number, or reference signal ports of the reference signal resource 2 and the reference signal resource 3 may correspond to antenna ports with a same number. This is not limited herein. An example in which the reference signal ports of the reference signal resource 1 and the reference signal resource 3 correspond to the antenna ports with the same number is used. A correspondence between reference signal ports corresponding to the three reference signal resources and antenna ports is shown in Table 4.

**Table 4**

| | Reference signal resource 1 | Reference signal resource 2 | Reference signal resource 3 |
|---|---|---|---|
| Numbers of reference signal ports | #0 to #15 | #0 to #15 | #0 to #15 |
| Numbers of antenna ports | #3000 to #3015 | #3016 to #3031 | #3000 to #3015 |

Case B: Reference signal ports of all reference signal resources in the reference resource set 1 correspond to antenna ports with a same number. An example in which the reference resource set 1 includes a reference signal resource 1, a reference signal resource 2, and a reference signal resource 3 is used. A correspondence between reference signal ports corresponding to the three reference signal resources and antenna ports is shown in Table 5.

**Table 5**

| | Reference signal resource 1 | Reference signal resource 2 | Reference signal resource 3 |
|---|---|---|---|
| Numbers of reference signal ports | #0 to #15 | #0 to #15 | #0 to #15 |
| Numbers of antenna ports | #3000 to #3015 | #3000 to #3015 | #3000 to #3015 |

Scenario 2: The plurality of reference signal resources belong to the different signal resource sets (for example, a reference resource set 1 and a reference resource set 2), and a correspondence between the M reference signal ports and the antenna ports includes the following several cases.

Case A: The reference resource set 1 and the reference resource set 2 include a same quantity of reference signal resources, and a reference signal resource included in the reference resource set 1 is in one-to-one correspondence with a reference signal resource included in the reference resource set 2. An example in which the reference resource set 1 includes a reference signal resource 1, a reference signal resource 2, and a reference signal resource 3, and the reference signal resource set 2 includes a reference signal resource 4, a reference signal resource 5, and a reference signal resource 6 is used. A correspondence between reference signal ports corresponding to the six reference signal resources and antenna ports is shown in Table 6.

**Table 6**

| | Reference signal resource set #1 | | | Reference signal resource set #2 | | |
|---|---|---|---|---|---|---|
| | Reference signal resource 1 | Reference signal resource 2 | Reference signal resource 3 | Reference signal resource 4 | Reference signal resource 5 | Reference signal resource 6 |
| Numbers of reference signal ports | #0 to #15 | #0 to #15 | #0 to #15 | #0 to #15 | #0 to #15 | #0 to #15 |
| Numbers of antenna ports | #3000 to #3015 | #3016 to #3031 | #3032 to #3047 | #3000 to #3015 | #3016 to #3031 | #3032 to #3047 |

Case B: A part of reference signal resources in the reference signal resource set 1 and a part of reference signal resources in the reference signal resource set 2 correspond to antenna ports with a same number. An example in which the reference resource set 1 includes a reference signal resource 1, a reference signal resource 2, and a reference signal resource 3, and the reference signal resource set 2 includes a reference signal resource 4 is used. A correspondence between reference signal ports corresponding to the four reference signal resources and antenna ports is shown in Table 7.

**Table 7**

| | Reference signal resource set #1 | | | Reference signal resource set #2 |
|---|---|---|---|---|
| | Reference signal resource 1 | Reference signal resource 2 | Reference signal resource 3 | Reference signal resource 4 |
| Numbers of reference signal ports | #0 to #15 | #0 to #15 | #0 to #15 | #0 to #15 |
| Numbers of antenna ports | #3000 to #3015 | #3016 to #3031 | #3032 to #3047 | #3000 to #3015 |

Optionally, because the N port groups include reference signal ports corresponding to a same antenna port, to avoid an antenna port conflict, a reference signal corresponding to each of the N port groups occupies a different time domain resource.

Optionally, to avoid the antenna port conflict, different reference signal port groups or different reference signal resources corresponding to a same antenna port occupy different time domain resources or different slot resources.

S302: The network device sends, to the terminal device based on the first configuration information, a first reference signal corresponding to the M reference signal ports. Correspondingly, the terminal device receives, based on the first configuration information, the first reference signal corresponding to the M reference signal ports.

The network device may send the first reference signals to the terminal device through antenna ports corresponding to the M reference signal ports. The first reference signal may be, for example, an NZP-CSI-RS, a CSI-synchronization signal block (synchronization signal block, SSB), a zero power (zero power, ZP)-CSI-RS, or a CSI-interference measurement (interference measurement, IM) signal.

Optionally, the network device may send the first reference signal to the terminal device through an antenna port corresponding to each of the N port groups. A reference signal sent through an antenna port corresponding to one port group may be received by using one receive beam. Therefore, optionally, the first configuration information may be further used to configure N, and the terminal device may receive, by using N receive beams, the first reference signal corresponding to the M reference signal ports.

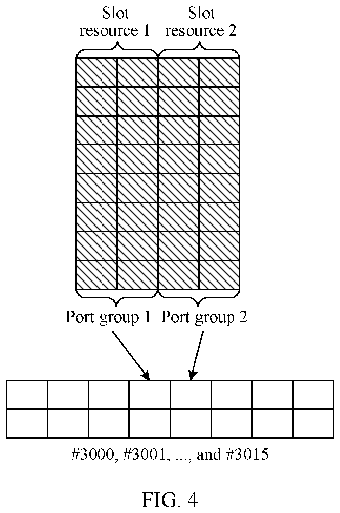

For example, FIG. 4 is an example diagram in which the network device sends, to the terminal device, the first reference signal corresponding to the M reference signal ports according to an embodiment of this application. In the example shown in FIG. 4, 32 reference signal ports are configured by using the first configuration information, and the 32 reference signal ports are grouped into two port groups: a port group 1 and a port group 2 shown in FIG. 4, where the port group 1 and the port group 2 each include 16 reference signal ports. A time domain resource corresponding to the port group 1 is a time domain resource 1, and numbers of antenna ports corresponding to the port group 1 are #3000, #3001, ..., and #3015; and a time domain resource corresponding to the port group 2 is a time domain resource 2, and numbers of antenna ports corresponding to the port group 2 are #3000, #3001, ..., and #3015, where the time domain resource 2 is adjacent to the time domain resource 1. The network device may send, to the terminal device through the antenna ports with the numbers of #3000, #3001, ..., and #3015 at a moment corresponding to the time domain resource 1, first reference signals corresponding to the port group 1, and send, to the terminal device through the antenna ports with the numbers of #3001, ..., and #3015 at a moment corresponding to the time domain resource 2, first reference signals corresponding to the port group 2.

The terminal device may receive, by using a receive beam 1 at the moment corresponding to the time domain resource 1, the first reference signals corresponding to the port group 1, and may receive, by using a receive beam 2 at the moment corresponding to the time domain resource 2, the first reference signals corresponding to the port group 2.

Optionally, the first configuration information is further used to configure the first period and the second period, or configure the third period and the fourth period. The network device may send, to the terminal device at a start moment of the first period or a start moment of the third period, first reference signals corresponding to the N port groups. In addition, the network device sends, to the terminal device at a start moment of the second period or a start moment of the fourth period, a first reference signal corresponding to at least one of the N port groups. The following separately describes several manners in which the network device sends the first reference signals to the terminal device.

Manner 1: The first configuration information is further used to configure the first period (T1) and the second period (T2). The network device may send the first reference signal to the terminal device at the start moment of the first period through the antenna port corresponding to each of the N port groups, and send first reference signals to the terminal device at the start moment of the second period through the M antenna ports.

An example in which T1=100 ms, T2=5 ms, and an initial sending moment of the first reference signal is a moment T0 is used. At a moment T, if (T-T0)‰T1=0, the network device sends the first reference signal to the terminal device through the antenna port corresponding to each of the N port groups; or if (T-T0)‰T1≠0 and (T-T0)‰T2=0, the network device sends the first reference signals to the terminal device through the M antenna ports. For example, the first reference signals are sent to the terminal device at moments (T0+5) ms, (T0+10) ms, ..., and (T0+95) ms through the M antenna ports; and the first reference signal is sent to the terminal device at (T0+100) ms through the antenna port corresponding to each of the N port groups. ‰ represents calculating a remainder.

Manner 2: The first configuration information is further used to configure the third period (T3) and the fourth period (T4). The network device may send the first reference signal to the terminal device at the start moment of the third period through the antenna port corresponding to each of the N port groups, that is, the network device sends a first reference signal on N reference signal resources to the terminal device, where the N reference signal resources include the first reference signal resource and the second reference signal resource; and the network device sends a first reference signal to the terminal device at the start moment of the fourth period through an antenna port corresponding to a port group (for example, a port group A) among the N port groups, that is, the network device sends a first reference signal on the second reference signal resource to the terminal device.

An example in which T3=100 ms, T4=5 ms, and an initial sending moment of the first reference signals is a moment T0 is used. At a moment T, if (T-T0)‰T1=0, the network device sends the first reference signals on the N reference signal resources to the terminal device; or if (T-T0)‰T1≠0 and (T-T0)‰T2=0, the network device sends the first reference signal on the second reference signal resource to the terminal device. For example, the network device sends the first reference signal on the second reference signal resource to the terminal device at moments (T0+5) ms, (T0+10) ms, ..., and (T0+95) ms; and the network device sends the first reference signals on the N reference signal resources to the terminal device at (T0+100) ms.

Optionally, as described above, the M reference signal ports are associated with one reference signal resource, and the network device may further configure the reference signal resource 2 for the terminal device. Therefore, the network device may further send a reference signal (for example, a second reference signal) on the reference signal resource 2 to the terminal device at the start moment of the second period. The second reference signal may be, for example, an NZP-CSI-RS, a CSI-SSB, a ZP-CSI-RS, or a CSI-IM signal. Optionally, the second reference signal may be the same as or different from the first reference signal. For example, the first reference signal is a CSI-SSB, and the second reference signal may be a CSI-RS.

The terminal device may receive, by using the N receive beams at the start moment of the first period or the start moment of the third period, first reference signals corresponding to the N port groups; and receive, at the start moment of the second period, a second reference signal corresponding to the M antenna ports, or receive, at the start moment of the fourth period, the first reference signal corresponding to the port group A.

S303: The terminal device determines a first parameter based on the first reference signal.

The first parameter is obtained based on measurement of a same channel, and the first parameter may include one or more of the following: first channel state information, a receive beam of the terminal device, or a transmit beam of the terminal device.

The first channel state information may be used to determine a channel state of a downlink data channel, for example, a precoding matrix indicator (precoding matrix indicator, PMI), a channel rank indicator (rank indicator, RI), or a channel quality indicator (channel quality indicator, CQI). Therefore, optionally, the terminal device may further send the first channel state information to the network device, and the network device may determine the channel state of the downlink data channel based on the first channel state information. The receive beam of the terminal device may be used to receive a reference signal (for example, the first reference signal and/or the second reference signal) or data from the network device. For example, the terminal device may receive, at the start moment of the second period or the start moment of the fourth period by using a receive beam determined based on the first reference signal received by the terminal device at the start moment of the first period or the start moment of the third period, the second reference signal corresponding to the M antenna ports, or receive, at the start moment of the fourth period, the first reference signal corresponding to the port group A.

The terminal device may determine second channel state information based on a reference signal received at the start moment of the second period or the start moment of the fourth period, where the second channel state information may be used by the network device to determine a channel state of a downlink data channel.

Optionally, because the M reference signal ports are grouped into the N port groups, and a quantity of reference signal ports included in each of the N port groups is less than M, the following S304 may be further performed: The network device sends second configuration information to the terminal device. Correspondingly, the terminal device receives the second configuration information.

The second configuration information is used to configure codebook information associated with the M reference signal ports, and the terminal device may perform PMI quantization based on the codebook. Optionally, a quantity of codebooks configured by using the second configuration information is less than or equal to N. For example, if each of the N port groups includes a different quantity of reference signal ports, that is, each port group corresponds to a different quantity of antenna ports, the quantity of codebooks configured by using the second configuration information is equal to N. If at least two of the N port groups include a same quantity of reference signal ports, the quantity of codebooks configured by using the second configuration information is less than N. An example in which the port group 1 and the port group 2 include a same quantity of reference signal ports is used, and the port group 1 and the port group 2 may reuse a same codebook. Optionally, the second configuration information and the first configuration information may be same information or different information. This is not limited in this embodiment of this application. If the second configuration information and the first configuration information are different information, S304 may be performed before S301, after S301, or simultaneously with S301.

Optionally, the second configuration information may be further used to configure a first codebook and a second codebook that are associated with the M reference signal ports, where a quantity of antenna ports corresponding to the first codebook is equal to M, and a quantity of antenna ports corresponding to the second codebook is less than M. If the M reference signal ports are grouped into the N port groups, PMI quantization is performed by using the second codebook; or if the M reference signal ports correspond to the M antenna ports, PMI quantization is performed by using the first codebook.

In the foregoing technical solutions, the terminal device may simultaneously determine, based on the first reference signals, the receive beam of the terminal device and the channel state information for determining the downlink data channel, so that a matching degree between the receive beam used by the terminal device to receive data and a transmit beam used by the network device to send the data is higher, thereby helping improve a data transmission rate.

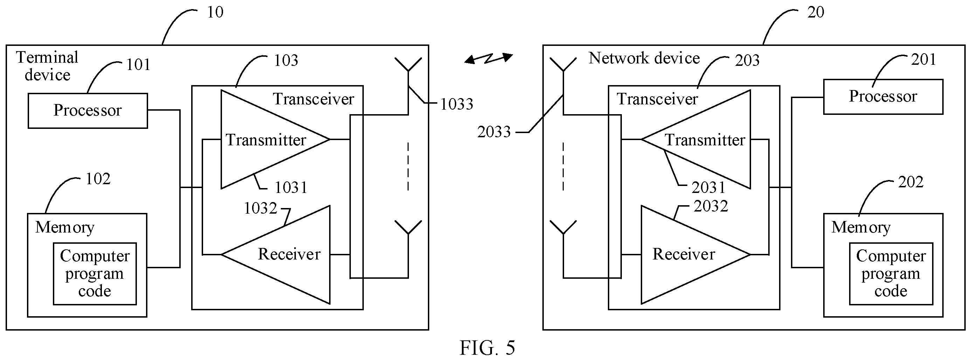

FIG. 5 is diagrams of structures of a terminal device 10 and a network device 20 according to an embodiment of this application. The terminal device 10 may be the terminal device in the embodiment shown in FIG. 3, and is configured to implement the method corresponding to the terminal device in the foregoing method embodiments. The network device 20 may be the network device in the embodiment shown in FIG. 3, and is configured to implement the method corresponding to the network device in the foregoing method embodiments.

The terminal device 10 includes at least one processor (an example in which one processor 101 is included is used for description in FIG. 5). The processor 101 may be configured to perform internal processing of the apparatus, to implement a specific control processing function. Optionally, different processors may be independent devices, may be located at different physical locations, or may be located on different integrated circuits. Optionally, different processors may be integrated into one or more processors, for example, integrated into one or more integrated circuits.

Optionally, the terminal device 10 further includes one or more memories (an example in which one memory 102 is included is used for description in FIG. 5), configured to store instructions. Optionally, the memory 102 may further store data. The processor 101 and the memory 102 may be disposed separately, or may be integrated together.

The terminal device 10 may further include at least one transceiver (an example in which one transceiver 103 is included is used for description in FIG. 5). The transceiver may be configured to send information to another apparatus or receive information from another apparatus. The transceiver may be referred to as a transceiver machine, a transceiver circuit, an input/output interface, or the like, and is configured to implement a transceiver function of the terminal device 10 by using an antenna. Optionally, the transceiver includes a transmitter (transmitter) 1031, a receiver (receiver) 1032, and an antenna 1033. For example, the transmitter 1031 may be configured to generate a radio frequency (radio frequency) signal based on a baseband signal, the receiver 1032 may be configured to convert the radio frequency signal into the baseband signal, and the antenna 1033 may be configured to transmit/receive the radio frequency signal.

The processor 101, the memory 102, and the transceiver 103 are connected to each other through a communication line. The communication line may include a path for information transfer between the foregoing components.

The processor 101 may include a general-purpose central processing unit (central processing unit, CPU), a microprocessor, an application-specific integrated circuit (application-specific integrated circuit, ASIC), or one or more integrated circuits configured to control program execution of the solutions of this application.

The memory 102 may be a read-only memory (read-only memory, ROM), another type of static storage device that can store static information and instructions, a random access memory (random access memory, RAM), another type of dynamic storage device that can store information and instructions, an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that is accessible by a computer. However, the memory 102 is not limited thereto. The memory 102 may exist independently, and is connected to the processor 101 through the communication line. Alternatively, the memory 102 may be integrated with the processor 101.

The memory 102 is configured to store computer-executable instructions for performing the solutions of this application, and execution of the computer-executable instructions is controlled by the processor 101. The processor 101 is configured to execute the computer-executable instructions stored in the memory 102, to implement a step performed by the terminal device in the embodiment shown in FIG. 3. Optionally, the computer-executable instructions in this embodiment of this application may also be referred to as application program code, computer program code, or instructions. This is not specifically limited in this embodiment of this application.

During specific implementation, in an embodiment, the terminal device 10 may include a plurality of processors. Each of these processors may be a single-core (single-CPU) processor, or may be a multi-core (multi-CPU) processor. The processor herein may be one or more devices, circuits, and/or processing cores configured to process data (for example, computer program instructions).

The network device 20 includes at least one processor (an example in which one processor 201 is included is used for description in FIG. 5), at least one transceiver (an example in which one transceiver 203 is included is used for description in FIG. 5), and at least one memory (an example in which one memory 202 is included is used for description in FIG. 5). The transceiver 203 may be configured to send information to another apparatus or receive information from another apparatus. The transceiver may be referred to as a transceiver machine, a transceiver circuit, an input/output interface, or the like, and is configured to implement a transceiver function of the network device 20 by using an antenna. Optionally, the transceiver includes a transmitter 2031, a receiver 2032, and an antenna 2033. For example, the transmitter 2031 may be configured to generate a radio frequency (radio frequency) signal based on a baseband signal, the receiver 1032 may be configured to convert the radio frequency signal into the baseband signal, and the antenna 1033 may be configured to transmit/receive the radio frequency signal.

The processor 201, the memory 202, and the transceiver 203 are connected through a communication line. In addition, for related descriptions of the processor 201, the memory 202, and the transceiver 203, refer to the descriptions of the processor 101, the memory 102, and the transceiver 103 in the terminal device 10. Details are not described herein again.

It may be understood that the structures shown in FIG. 5 do not constitute specific limitations on the terminal device 10 and the network device 20. For example, in some other embodiments of this application, the terminal device 10 or the network device 20 may include more or fewer components than those shown in the figure, some components may be combined, some components may be split, or the components may be differently arranged. The components shown in the figure may be implemented by hardware, software, or a combination of software and hardware.

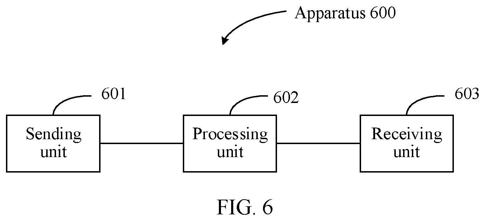

In this embodiment of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. During actual implementation, another division manner may be used. For example, when each functional module is obtained through division based on each corresponding function, FIG. 6 is a diagram of an apparatus. The apparatus 600 may be the terminal device or the network device in the foregoing method embodiments, or a chip in the terminal device or a chip in the network device. The apparatus 600 includes a sending unit 601, a processing unit 602, and a receiving unit 603.

It should be understood that the apparatus 600 may be configured to implement a step performed by the terminal device or the network device in the communication method in embodiments of this application. For related features, refer to any one of the embodiments shown in FIG. 3. Details are not described herein again.

Optionally, functions/implementation processes of the sending unit 601, the receiving unit 603, and the processing unit 602 in FIG. 6 may be implemented by the processor 101 in FIG. 5 by invoking the computer-executable instructions stored in the memory 102, or may be implemented by the processor 201 in FIG. 5 by invoking computer-executable instructions stored in the memory 202. Alternatively, a function/an implementation process of the processing unit 602 in FIG. 6 may be implemented by the processor 101 in FIG. 5 by invoking the computer-executable instructions stored in the memory 102, or may be implemented by the processor 201 in FIG. 5 by invoking computer-executable instructions stored in the memory 202.

Optionally, when the apparatus 600 is a chip or a circuit, the functions/implementation processes of the sending unit 601 and the receiving unit 603 may alternatively be implemented by using a pin, a circuit, or the like.

This application further provides a computer-readable storage medium. The computer-readable storage medium stores a computer program or instructions. When the computer program or the instructions are run, the method performed by the terminal device or the network device in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is caused to perform the method performed by the terminal device or the network device in any one of the foregoing method embodiments.

An embodiment of this application further provides a processing apparatus, including a processor and an interface. The processor is configured to perform the method performed by the terminal device or the network device in any one of the foregoing method embodiments.

All or a part of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive, (solid-state drive, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of compute apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or any other form of storage medium in the art. For example, the storage medium may be connected to a processor, so that the processor may read information from the storage medium and write information to the storage medium. Optionally, the storage medium may alternatively be integrated into the processor. The processor and the storage medium may be disposed in an ASIC, and the ASIC may be disposed in a terminal device or a network device. Optionally, the processor and the storage medium may alternatively be disposed in different components of the terminal device or the network device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the terminal device or the network device may perform a part or all of steps in embodiments of this application. These steps or operations are merely examples. In embodiments of this application, other operations or variations of various operations may be further performed. In addition, the steps may be performed in a sequence different from that presented in embodiments of this application, and not all of the operations in embodiments of this application may be necessarily performed.

## Claims

1. A communication method, applied to a terminal device, wherein the method comprises:
receiving first configuration information, wherein the first configuration information is used to configure M reference signal ports, the M reference signal ports comprise a first reference signal port and a second reference signal port, the first reference signal port and the second reference signal port correspond to a same antenna port, and M is an integer greater than 1;
receiving, based on the first configuration information, a first reference signal corresponding to the M reference signal ports; and
determining a first parameter based on the first reference signal, wherein the first parameter comprises one or more of the following: first channel state information, a receive beam of a terminal device, or a transmit beam of the terminal device.

2. The method according to claim 1, wherein the M reference signal ports are comprised in N port groups, a quantity K1 of reference signal ports comprised in a first port group among the N port groups is greater than or equal to a quantity K2 of reference signal ports comprised in a second port group among the N port groups, and K1 antenna ports corresponding to the first port group comprise K2 antenna ports corresponding to the second port group.

3. The method according to claim 2, wherein the first configuration information is further used to configure N; and
the receiving, based on the first configuration information, the first reference signal corresponding to the M reference signal ports comprises: receiving, by using N receive beams, the first reference signal corresponding to the M reference signal ports, wherein each of the N receive beams is used to receive a first reference signal corresponding to one port group.

4. The method according to claim 2 or 3, wherein a reference signal corresponding to each of the N port groups occupies a different time domain resource.

5. The method according to any one of claims 1 to 4, wherein the M reference signals are associated with a plurality of reference signal resources, the plurality of reference signal resources comprise a first parameter signal resource and a second reference signal resource, and a transmission period of the first reference signal resource is an integer multiple of a transmission period of the second reference signal resource.

6. The method according to any one of claims 1 to 5, wherein the method further comprises:
receiving a second reference signal by using the receive beam; and
determining second channel state information based on the second reference signal, wherein the second channel state information is used to determine channel state information of a downlink data channel.

7. The method according to any one of claims 1 to 6, wherein the method further comprises:
receiving second configuration information, wherein the second configuration information is used to configure a codebook associated with the M reference signal ports, and a quantity of antenna ports corresponding to the codebook is less than M.

8. A communication method, wherein the method comprises:
sending first configuration information, wherein the first configuration information is used to configure M reference signal ports, the M reference signal ports comprise a first reference signal port and a second reference signal port, the first reference signal port and the second reference signal port correspond to a same antenna port, and M is an integer greater than 1; and
sending, based on the first configuration information, a first reference signal corresponding to the M reference signal ports.

9. The method according to claim 8, wherein the M reference signal ports are comprised in N port groups, a quantity K1 of reference signal ports comprised in a first port group among the N port groups is greater than or equal to a quantity K2 of reference signal ports comprised in a second port group among the N port groups, and K1 antenna ports corresponding to the first port group comprise K2 antenna ports corresponding to the second port group.

10. The method according to claim 9, wherein the first configuration information is further used to configure N.

11. The method according to claim 9 or 10, wherein each of the N port groups occupies a different time domain resource.

12. The method according to any one of claims 8 to 11, wherein the M reference signals are associated with a plurality of reference signal resources, the plurality of reference signal resources comprise a first parameter signal resource and a second reference signal resource, and a transmission period of the first reference signal resource is an integer multiple of a transmission period of the second reference signal resource.

13. The method according to any one of claims 8 to 12, wherein the method further comprises:
sending second reference signals through M antenna ports, wherein the M antenna ports are in one-to-one correspondence with the M reference signal ports.

14. The method according to any one of claims 8 to 13, wherein the method further comprises:
sending second configuration information, wherein the second configuration information is used to configure a codebook associated with the M reference signal ports, and a quantity of antenna ports corresponding to the codebook is less than M.

15. A communication system, comprising a terminal apparatus and a network apparatus, wherein the terminal apparatus is configured to perform the method according to any one of claims 1 to 7, and the network apparatus is configured to perform the method according to any one of claims 8 to 14.

16. A communication apparatus, comprising a processor and a memory, wherein the memory is coupled to the processor, and the processor is configured to invoke computer instructions in the memory to perform the method according to any one of claims 1 to 7, or to perform the method according to any one of claims 8 to 14.

17. A computer-readable storage medium, wherein the computer-readable storage medium stores computer-executable instructions, and when the computer-executable instructions are invoked by the computer, the method according to any one of claims 1 to 7 is performed, or the method according to any one of claims 8 to 14 is performed.

18. A computer program product, wherein the computer program product comprises a computer program, and when the computer program is run on a computer, the computer is caused to perform the method according to any one of claims 1 to 7, or the computer is caused to perform the method according to any one of claims 8 to 14.

19. A computer program, comprising program code, wherein when the computer runs the program code, the program code is used to perform the method according to any one of claims 1 to 7, or the program code is used to perform the method according to any one of claims 8 to 14.

20. A chip, wherein the chip is coupled to a memory, and is configured to read and execute program instructions stored in the memory, to implement the method according to any one of claims 1 to 7, or implement the method according to any one of claims 8 to 14.
